# EUROPEAN PATENT APPLICATION

(11) **EP 2 733 124 A1**
(43) Date of publication of application: **21.05.2014**
(21) Application number: 13166340.3
(22) Date of filing: 02.05.2013
(51) Int. Cl.: C03B 5/235, C03B 5/237, F23L 7/00, F23L 15/02, F27B 3/22, F27B 3/26, C21B 7/16, C21C 5/52

(54) **Method and apparatus for injecting oxygen into a furnace**

(30) Priority: 19.11.2012 US 201213680215
(71) Applicant: Linde Aktiengesellschaft, 80331 München (DE)
(72) Inventor: Simpson, Neil G., Ayton, Eyemouth, Berwickshire TD14 5QX (GB)
(74) Representative: Hofmann, Andreas

(57) **Abstract**

In order to overcome the problems that earlier methods have experienced, a method of introducing oxygen enriched air into a furnace is proposed, the method comprising:
- injecting oxygen to a combustion chamber of the furnace (10); and
- entraining air into the oxygen during the injecting and prior to the oxygen entering the combustion chamber.

A corresponding fluid injection apparatus for a furnace comprises:
- a housing having a space therein and a discharge orifice (53) in communication with the space and a combustion chamber of the furnace (10);
- a lance (48) for oxygen disposed in the space and in communication with the discharge orifice (53), said lance (48) in particular being adjustably moveable within the space to control a flow of the oxygen and the air; and
- an inlet duct (54) for air in communication with the space external to the lance (53).

## Description

The present invention relates to methods and to an apparatus for injecting oxygen into a furnace.

### Technological background of the present invention

Regenerative glass melting furnaces use regenerators - high temperature heat exchangers - which are essentially large assemblies of bricks and/or high temperature refractories. The regenerators can become blocked after many years of use or from perhaps structural failure of the refractory, which thus starves the furnace of air that the regenerator is providing.

In order to overcome the blockage of the regenerators, it is known to install by-pass flues for the blocked portion of the regenerators. Unfortunately, such flues result in lower air pre-heat temperatures, which is less efficient and results in increased gas use and accordingly, more air is needed for the furnace, which defeats the purpose of the by-pass flue.

It is also been known to enrich the furnace with oxygen either upstream, as a single injection point, or downstream, with a plurality of injection points through reversal valves. However, such an application is limited in the percentage of oxygen that can be used. Such oxygen still has to pass through the blockage in the regenerator and therefore, the problem is not cured.

Lancing has been found to be a more efficient method to provide oxygen to the furnace. However, when using large cross-fired furnaces, the installation for the lances can be quite significant, requiring construction of the furnace to accommodate the lances. Such construction may provide undesirable furnace conditions, wherein unwanted foam generation occurs in the glass melt.

Finally, there may be limits on the amount of compressed oxygen available at the site of the furnace.

### Disclosure of the present invention: object, solution, advantages

Starting from the disadvantages and shortcomings as described above and taking the prior art as discussed into account, an object of the present invention is to overcome the problems that earlier methods and apparatus have experienced.

This object is accomplished by a method comprising the features of claim 1, by a method comprising the features of claim 7 as well as by an apparatus comprising the features of claim 10. Advantageous embodiments and expedient improvements of the present invention are disclosed in the respective dependent claims.

Basically, the present invention provides for a method and apparatus for introducing oxygen enriched air into a furnace, including
- injecting oxygen to a combustion chamber of the furnace; and
- entraining air into the oxygen during the injecting and/or prior to the oxygen entering the combustion chamber, in particular mixing the oxygen and the air.

If the furnace is a regenerative furnace, in particular a cross-fired regenerative furnace, the method and apparatus for introducing oxygen enriched air can be mounted to at least one regenerator for the furnace; in this case, the oxygen may be injected to a top portion of the regenerator for the furnace.

According to an advantageous embodiment of the present invention, the injecting to the top portion of the regenerator may be above a plurality of heat recovery bricks, also known as checker bricks, in the regenerator such that the air flows over and contacts a corresponding plurality of the heat recovery bricks.

According to an expedient embodiment of the present invention, the injecting may be
- through an end wall of the regenerator and/or
- through a sidewall of the regenerator and/or
- through a peep site hole in the regenerator.

According to a favoured embodiment of the present invention, hot ambient air may be directed from a region at an exterior of and proximate to the furnace into the entraining air for mixing with the oxygen and in particular with the air. Such hot ambient air may preferably be delivered through a conduit from a position near a forehearth to be provided to an inlet duct at the regenerator, as a heated air flow, said conduit
- in particular having a first end in communication with the inlet duct, and
- in particular having a second end in communication with the hot ambient air from a region at an exterior of and proximate to the furnace.

According to a preferred embodiment of the present invention, a flow rate of the injecting oxygen may be adjusted for controlling a flow rate of the entraining air to be responsive to a flow rate of the injecting oxygen.

According to an advantageous embodiment of the present invention, turbulence may be created
- in the entraining air for mixing with the oxygen and/or
- in the injecting oxygen for mixing with the air.

To that aim, a swirler vane or vortex element or vortex member may expediently be disposed in an internal passageway of an oxygen lance to provide turbulence to the oxygen stream to increase mixing of same with the entrained air flow.

According to the present invention, the fluid injection apparatus, in particular the oxygen injector, for a furnace and/or for a regenerator comprises
- a housing having a space therein and a discharge orifice in communication with the space and a combustion chamber of the furnace, said housing
   --in particular being mounted to at least one of an end wall, a sidewall and a crown of the furnace and
   --in particular being in communication with the combustion chamber;
- a lance for oxygen disposed in the space and in communication with the discharge orifice, said lance in particular being adjustably moveable within the space to control a flow of the oxygen and the air; and
- an inlet duct for air in communication with the space external to the lance.

If the furnace is a regenerative furnace, in particular a cross-fired regenerative furnace, the housing may preferably be mounted to at least one of an end wall, a side wall and a roof of the regenerator for the furnace and may preferably be in communication with an interior of the regenerator.

According to an expedient embodiment of the present invention, a nozzle may be mounted to the housing at the discharge orifice. With the oxygen lance favourably being movably positionable and adjustable with respect to the nozzle, said nozzle may control the flow of the entrained air through the inlet duct.

According to a preferred embodiment of the present invention,
- a vortex member, in particular swirler vane, may be disposed in the space for creating turbulence of the air, and/or
- a vortex member, in particular swirler vane, may be disposed at an interior of the oxygen lance for creating turbulence of the oxygen.

With the oxygen injection apparatus including both vortex elements in a respective one of the space and the passageway, the highest amount of turbulence is provided to facilitate mixing the injected oxygen with the entrained air flow.

The present invention finally relates to the use of the method as described above and/or of at least one apparatus as described above for injecting oxygen into a furnace.

### Brief description of the drawings

For a more complete understanding of the present inventive embodiment disclosures and as already discussed above, there are several options to embody as well as to improve the teaching of the present invention in an advantageous manner. To this aim, reference may be made to the claims dependent on claim 1, on claim 7 and on claim 10; further improvements, features and advantages of the present invention are explained below in more detail with reference to the following description of preferred embodiments by way of non-limiting example and to the appended drawing figure taken in conjunction with the description of the embodiments, of which:
- FIG. 1: shows a top plan view of a known sidewall regenerative furnace firing without oxygen injection;
- FIG. 2: shows a cross-sectional side view of an oxygen injector embodiment of the present invention for use with a furnace, said oxygen injector embodiment working according to the method of the present invention;
- FIG. 3: shows an end view in cross-section of the regenerative furnace taken along line 3-3 in FIG. 1 with positions for installation of the oxygen injector apparatus of FIG. 2;
- FIG. 4 to FIG. 7: show top plan views of the regenerative furnace having one or a plurality of the oxygen injector embodiments mounted for use with a respective one of the regenerative furnace, said oxygen injector embodiments working according to the method of the present invention;
- FIG. 8: shows a cross-sectional side view of the oxygen injector embodiment of FIG. 1 for being mounted to a wall of a furnace regenerator;
- FIG. 9 to FIG. 12: show cross-sectional side views of alternative embodiments of the oxygen injector apparatus of the present invention, said oxygen injector apparatus working according to the method of the present invention; and
- FIG. 13: shows a top plan view of a furnace having at least one oxygen injector apparatus embodiment for use therewith, said oxygen injector embodiment working according to the method of the present invention.

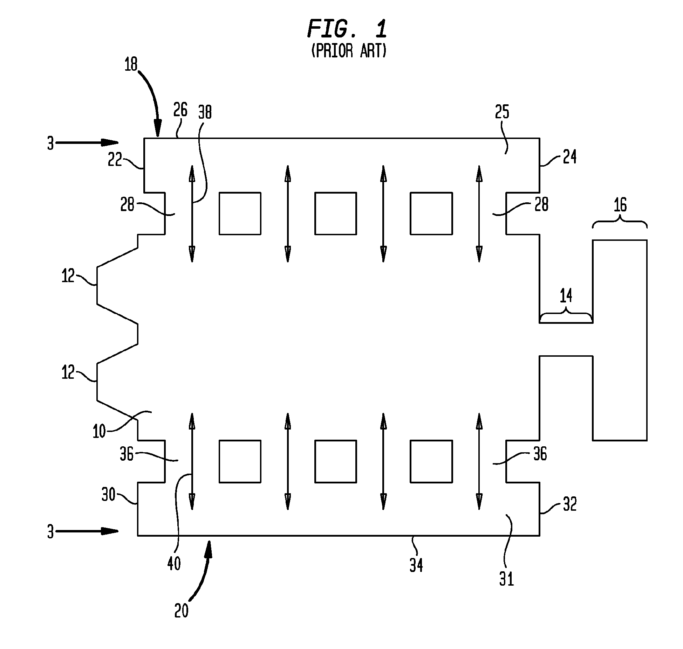

In the appended drawing figures, like equipment is labelled with the same reference numerals throughout the description of FIG. 1 to FIG. 13.

### Detailed description of the drawings; best way of embodying the present invention

Referring to FIG. 1, a known furnace is shown generally at 10. The furnace 10 can be used for heating applications to melt for example glass, steel, scrap metal or non-ferrous materials. By way of example only, the furnace 10 is a glass melting furnace to which the oxygen injector apparatus embodiment of the present invention can be mounted for operation.

The furnace 10 includes at one end at least one and in some applications a pair of chargers 12 through which glass ingredients or other materials are introduced into the furnace 10 for melting. The chargers 12 are located at an upstream end of the furnace 10, while a downstream end of the furnace 10 includes a throat section 14 and a distribution section 16. The distribution section 16 may include a forehearth or other structure for distribution of the glass melt.

Mounted to each side of the furnace 10 is a regenerator 18, 20, respectively. Therefore, in the combustion industry, the furnace 10 would be referred to as a cross-fired regenerative furnace. With respect to FIG. 1 and this description, the regenerator 18 will be referred to as the left-hand side regenerator, while the regenerator 20 will be referred to as the right-hand side regenerator.

The regenerator 18 includes corresponding end walls 22, 24, a top wall 23 or roof, and a side wall 26. A plurality of ports 28 of the regenerator 18 are in communication with the furnace 10.

The regenerator 20 also includes end walls 30, 32, a top wall 31 or roof, and a side wall 34. A plurality of ports 36 of the regenerator 20 are in communication with the furnace 10. The sidewalls 26, 34 are also known in the industry as the "target walls".

A gaseous flow of air through the ports 28, 36 is shown by arrows 38, 40 respectively.

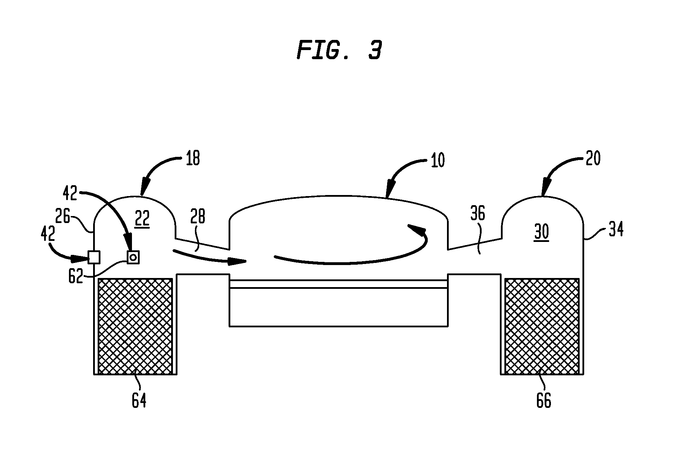

Although not shown in FIG. 1, but later shown and discussed in more detail with respect to FIG. 3, a plurality of heat recovery bricks, also known as checker bricks, are disposed in each one of the regenerators 18, 20 such that each of the airflows 38, 40 flows over and contacts a corresponding plurality of the heat recovery bricks.

When firing, for example, from left to right in the furnace (from the regenerator 18 to the regenerator 20) combustion air is heated at the regenerator 18 and the heat recovered at the regenerator 20. This process is reversed when firing from right to left in the furnace 10.

In known cross-fired regenerative furnaces such as that shown generally at 10, any oxygen lancing would be directly into the furnace 10, but also be subjected to the disadvantages above with respect to such known furnaces. Operation of the regenerative furnace 10 as shown in FIG. 1 is therefore already known.

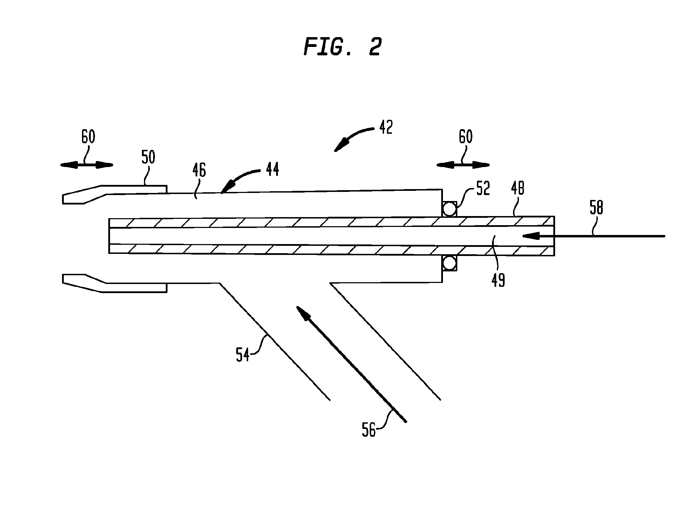

Referring to FIG. 2, an embodiment of an oxygen injector apparatus 42 of the present invention is shown for use with the known regenerative furnace 10. The injector 42 includes an injector body portion 44 having a space 46 or passageway therein in which to receive an oxygen lance 48 or pipe. The oxygen lance 48 includes an internal passageway 49. A distal end of the body portion 44 is provided with an injector nozzle 50. A proximal end of the body portion 44 is provided with a seal 52 or gasket.

An inlet duct 54 is in fluid communication with the space 46 of the body portion 44 so that entrained air indicated by arrow 56 can be introduced into the space 46 to be mixed with an oxygen stream represented by the arrow 58 flowing through the passageway 49 to be introduced into the space 46 by the oxygen lance 48. That is, the injection of the oxygen stream 58 through the oxygen lance 48 entrains air 56 through the inlet duct 54 to be mixed in the space 46 with the oxygen stream.

The oxygen lance 48 is movably positionable and adjustable with respect to the nozzle 50 which will, in effect, control the flow of the entrained air 56 through the inlet duct 54 into the space 46. Arrows 60 represent movement of the oxygen lance 48 in the space 46. The lance 48 is movable along its longitudinal axis substantially parallel to a longitudinal axis of the body portion 44 extending along the space 46.

All of the elements of the oxygen injector apparatus 42 are constructed of metal, except for the seal 52. In most applications, the entrained air 56 will be provided, for example injected, into the oxygen stream 58 before entering into the furnace 10 or the regenerators 18, 20.

The oxygen injector apparatus 42 can be mounted to the regenerator 18 in one or a plurality of positions as shown in FIG. 3. For example, the oxygen injector apparatus 42 can be mounted to the end wall 22 or the side/target wall 26 of the regenerator 18. Such location and mounting of the oxygen injector apparatus 42 can be through an existing peep site 62 of the regenerator 18.

The oxygen injector apparatus 42 can also be mounted in a similar manner to the regenerator 20. The heat recovery bricks 64, 66 or checker bricks discussed above with reference to FIG. 1, are shown in FIG. 3 as they would be disposed in respective ones of the regenerators 18, 20.

It should be understood that certain regenerators may have their end walls and/or side walls bored-out or originally manufactured to receive the oxygen injector apparatus 42, instead of mounting such apparatus in all of the peep sites 62. Operators of such furnaces will not want to plug all the peep sites with injector apparatus because it is important to be able to view an interior of the furnace 10 during combustion operations.

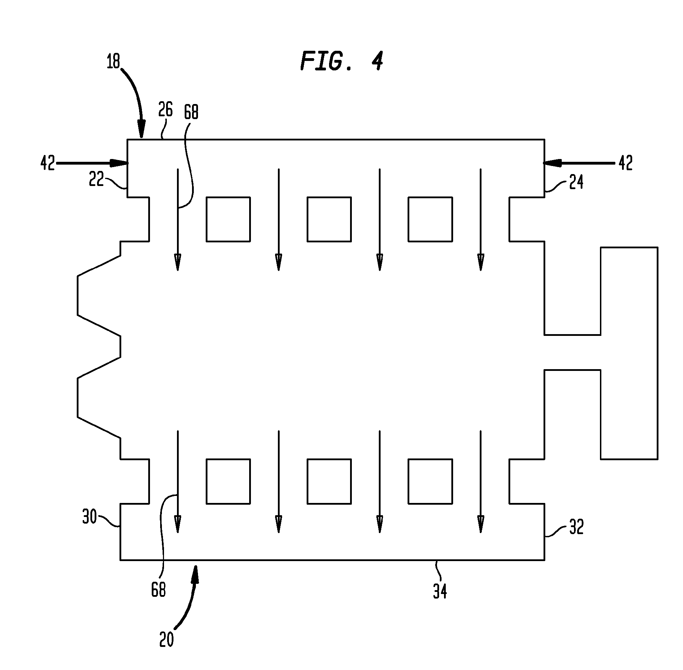

In FIG. 4 to FIG. 6, the oxygen injector apparatus 42 is shown mounted at the end walls 22, 24 and 30, 32, including being mounted at the side walls 26, 34. Referring to FIG. 4, arrows 68 show the gas flow being injected from the regenerator 18 that has the injector apparatus 42 mounted thereto.

As will be discussed below, the oxygen injector apparatus 42 is mounted so that a discharge orifice discussed further herein is in communication with a space in the regenerator 18 (and 20) above the heat recovery bricks 64, 66. As shown in FIG. 4, the gas flow 68 proceeds from the regenerator 18 into the furnace 10 to the regenerator 20 where it is exhausted or recycled.

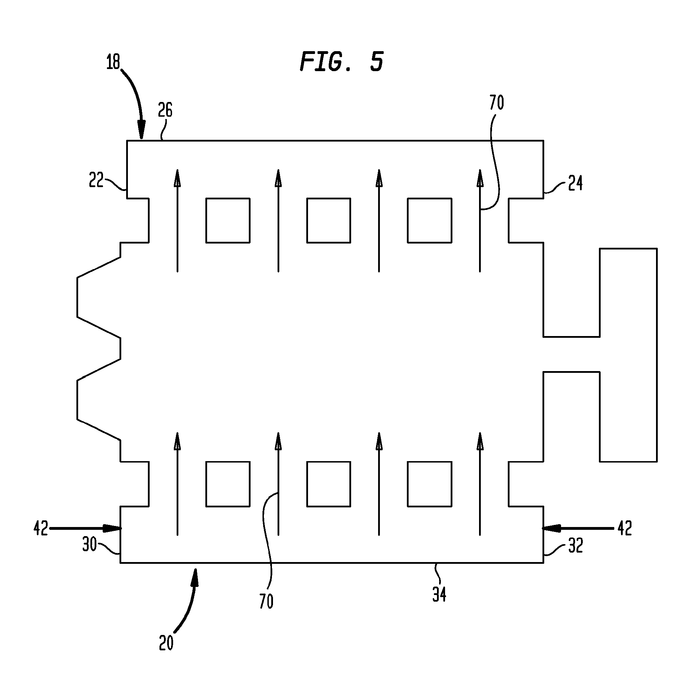

In FIG. 5, the oxygen injector apparatus 42 are mounted at the opposite regenerator 20 (the right-hand side regenerator) such that a gas flow 70 is from the regenerator 20 into the furnace 10 to the regenerator 18 where it is exhausted therefrom or recycled. With both embodiments of FIG. 4 and of FIG. 5, the oxygen injector apparatus 42 are mounted in the end walls 22, 24, 30, 32 of the respective regenerators 18, 20.

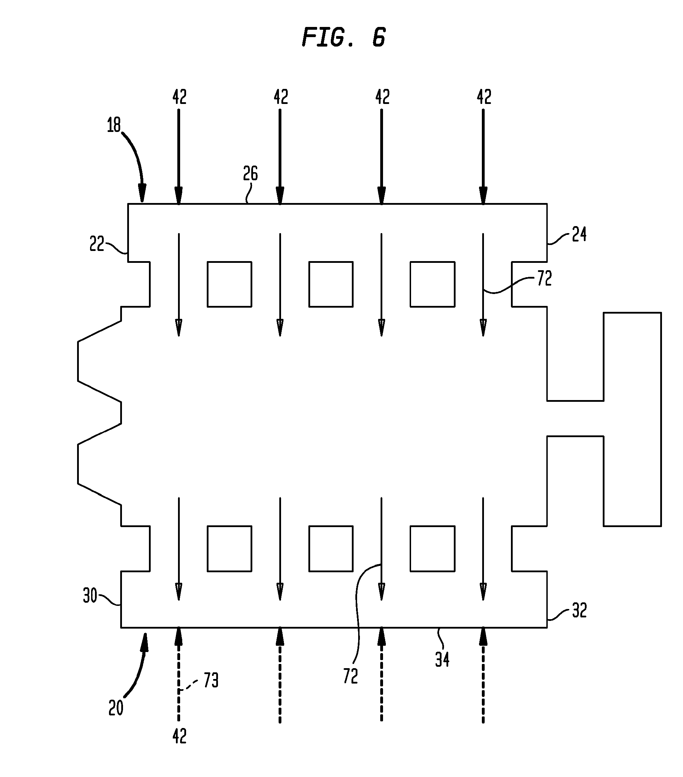

In FIG. 6, at least one, and for many applications a plurality of oxygen injector apparatus 42 are mounted in the side/target wall 26 of the regenerator 18. Accordingly, the gas flow represented by the arrow 72 shows the flow from the regenerator 18 into the furnace 10 and to the regenerator 20 where it is exhausted or recycled.

It will be understood that the oxygen injector apparatus 42 could be mounted for use with the regenerator 20 as shown by the broken arrows 73 for said apparatus. In such manner of construction and application, the gas flow 73 would be reversed to flow from the regenerator 20 into the furnace 10 and then to the regenerator 18 where it would be exhausted or recycled.

Another embodiment has the oxygen injector apparatus 42 mounted at both side walls 26, 34 of the regenerators 18, 20 respectively. However, for operation of same, only one regenerator will operate to provide the gas flow from the regenerator into the furnace 10 while the other regenerator does not have its oxygen injector apparatus activated.

After a select period of time, about twenty minutes to thirty minutes, the active regenerator and oxygen injector(s) are deactivated, and the opposite regenerator and oxygen injector(s) are activated.

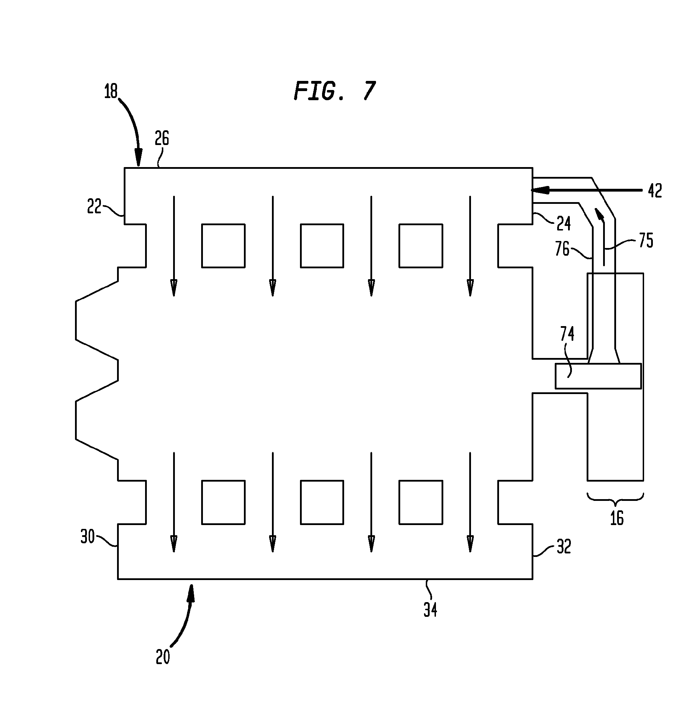

In FIG. 7, a still further embodiment of the regenerator is provided with the oxygen injector apparatus 42. The previous figures show that the entrained air 56 into the inlet duct 54 originated externally from the furnace 10, the regenerators 18, 20, the throat section 14 and the distribution section 16 of the furnace 10. Accordingly, the entrained air 56 is ambient air and is much cooler than that which is provided in the regenerators 18, 20.

In the embodiment of FIG. 7, the inlet duct 54 (see FIG. 2) of the oxygen injection apparatus 42 is in communication with heated air from an area or region near a forehearth 74 or the distribution section 16. That is, the ambient air is drawn in from a region external to and proximate the furnace 10 and the regenerators 18, 20 where the air is hot from exposure to the furnace and regenerators.

The hot air is shown for example being delivered through a conduit 76 from a position near the forehearth 74 to be provided to inlet duct 54 at the regenerator 18, as a heated air flow 75. It is understood that the arrangement of and coaction between the forehearth 74 and the conduit 76 could be such that the conduit is also in communication with the regenerator 20.

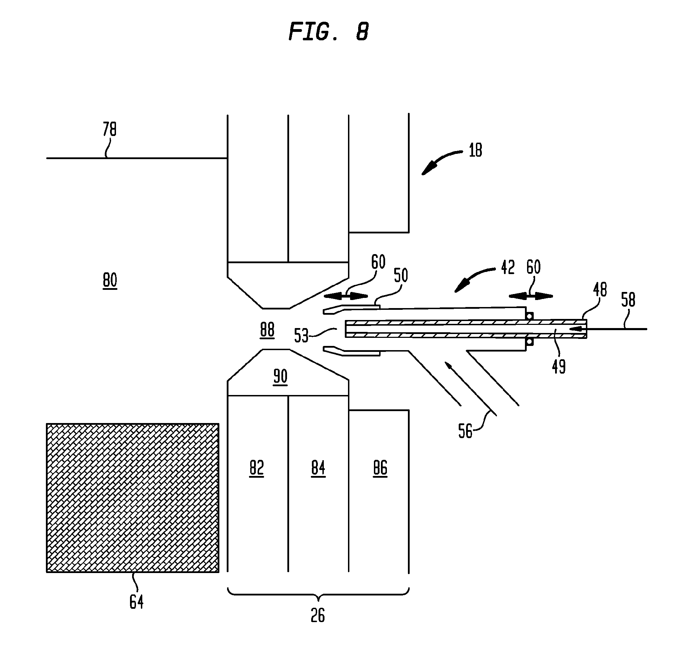

FIG. 8 shows in more detail how the regenerators 18, 20 would have the oxygen injection apparatus 42 mounted thereto. The illustration of FIG. 8 could be with reference to the end walls 22, 24 and 30, 32 or the sidewalls 26, 34. For purposes of explanation and by way of example only, the oxygen injection apparatus 42 is shown in FIG. 8 being mounted to the side wall 26 which, in conjunction with a roof 78 or crown of the regenerator 18, defines a space 80 or combustion chamber in the regenerator.

The side wall 26 may be constructed of an internal wall portion 82 adjacent to the heated atmosphere of the combustion chamber 80. Adjacent to the wall 82 is an outer wall portion 84. Insulation 86 is mounted to the outer wall portion 84. The side wall 26 has a hole 88 extending therethrough the internal and outer wall portions 82, 84 and the insulation 86 into which the oxygen injection apparatus 42 can be mounted.

The hole 88 may be bored through the side wall 26 or alternatively, the peep site 62 of the regenerator 18, 20 may be modified to receive the oxygen injection apparatus 42. A discharge orifice 53 of the apparatus 42 when mounted in the hole 88 is disposed above the heat recovery bricks 64. If the peep site 62 is used, the site is usually mounted in a block 90 in the sidewall 26.

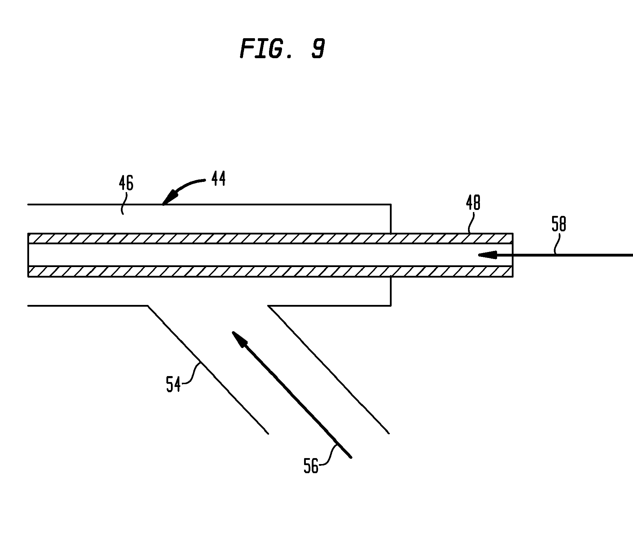

FIG. 9 shows another embodiment of the oxygen injection apparatus 42 having a more basic construction without the injector nozzle 50 and the seal 52.

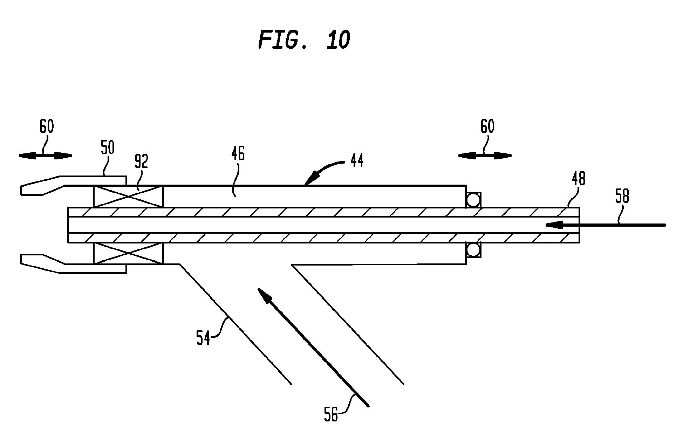

In FIG. 10, the oxygen injection apparatus 42 is essentially the same as that provided above in FIG. 2, with the addition of a swirler vane 92 or vortex element or member disposed in the space 46 to increase mixing of the entrained air 56 with the injected oxygen 58.

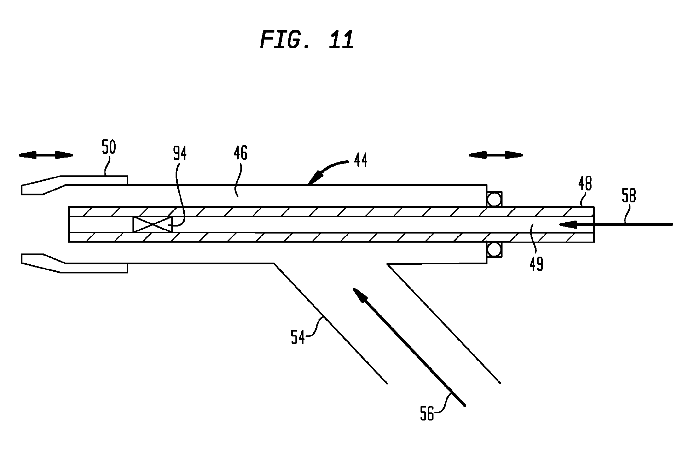

In FIG. 11, a swirler vane 94 or vortex element or member is disposed in the internal passageway 49 of the oxygen lance 48 to provide turbulence to the oxygen stream 58 to increase mixing of same with the entrained air flow 56.

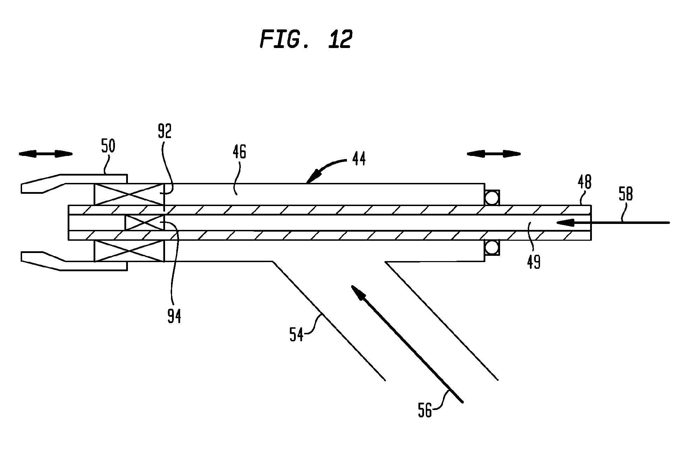

Referring to FIG. 12, the oxygen injection apparatus 42 includes both swirler vane elements 92, 94 in a respective one of the space 46 and the passageway 49. Such construction provides the highest amount of turbulence to facilitate mixing the injected oxygen 48 with the entrained air flow 56.

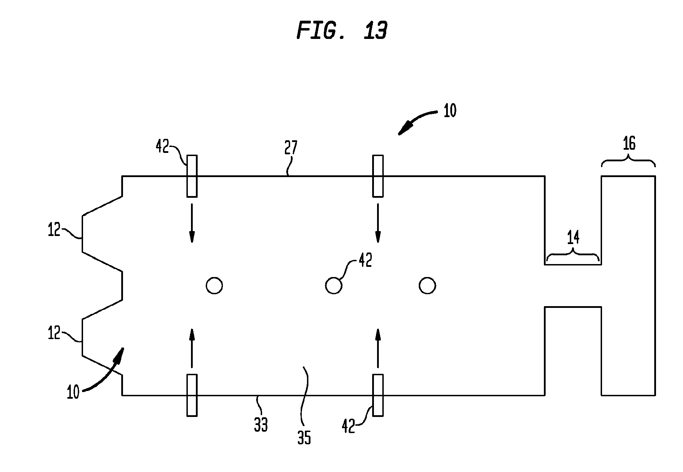

In FIG. 13, the furnace 10 is shown with the oxygen injector apparatus 42 mounted in side walls 27, 33 of the furnace 10 or alternatively, at least one oxygen injector apparatus 42 can be mounted in a roof 35 or crown of the furnace 10. It will be understood that any combination of the oxygen injector apparatus 42 can be mounted to the furnace 10 through the existing side walls 27, 33 or through the crown or through the roof 35, or even through existing peepholes (see FIG. 3) at the side walls.

Similarly, the furnace 10 shown in FIG. 13 can be constructed with the features to direct the hot ambient air 75 to the oxygen injector apparatus 42 as shown in FIG. 7, and to provide the same beneficial result of providing hotter air to be entrained with the oxygen for being injected into the combustion chamber of the furnace.

The entrained air 56 can be provided to the oxygen stream 58 prior to the oxygen stream 58 entering the regenerator 18, 20 or the furnace 10.

It will be understood that the embodiments described herein are merely exemplary, and that one skilled in the art may make variations and modifications without departing from the spirit and scope of the present invention. All such variations and modifications are intended to be included within the scope of the present invention as described and claimed herein. Further, all embodiments disclosed are not necessarily in the alternative, as various embodiments of the present invention may be combined to provide the desired result.

**List of reference numerals**

| | |
|---|---|
| 10 | furnace, in particular regenerative furnace, for example cross-fired regenerative furnace |
| 12 | charger |
| 14 | throat section |
| 16 | distribution section |
| 18 | regenerator, in particular first regenerator |
| 20 | regenerator, in particular second regenerator |
| 22 | end wall of regenerator 18 |
| 23 | top wall or roof of regenerator 18 |
| 24 | end wall of regenerator 18 |
| 26 | side wall or target wall of regenerator 18 |
| 27 | side wall of furnace 10 |
| 28 | port of regenerator 18 |
| 30 | end wall of regenerator 20 |
| 31 | top wall or roof of regenerator 20 |
| 32 | end wall of regenerator 20 |
| 33 | side wall of furnace 10 |
| 34 | side wall or target wall of regenerator 20 |
| 35 | roof or crown of furnace 10 |
| 36 | port of regenerator 20 |
| 38 | gaseous air flow through port 28 |
| 40 | gaseous air flow through port 36 |
| 42 | fluid injection apparatus, in particular oxygen injector apparatus |
| 44 | injector body portion |
| 46 | space or passageway of injector body portion 44 |
| 48 | oxygen lance or oxygen pipe |
| 49 | internal passageway |
| 50 | injector nozzle |
| 52 | seal or gasket |
| 53 | discharge orifice of fluid injection apparatus 42 |
| 54 | inlet duct |
| 56 | entrained air or entrained air flow |
| 58 | oxygen stream |
| 60 | movement of oxygen lance 48 in space 46 |
| 62 | peep site, in particular peep site hole, of regenerator 18 |
| 64 | heat recovery brick or checker brick, in particular first heat recovery brick or first checker brick |
| 66 | heat recovery brick or checker brick, in particular second heat recovery brick or second checker brick |
| 68 | gas flow from regenerator 18 into furnace 10 and then to regenerator 20 |
| 70 | gas flow from regenerator 20 into furnace 10 and then to regenerator 18 |
| 72 | gas flow from regenerator 18 into furnace 10 and then to regenerator 20 |
| 73 | gas flow from regenerator 20 into furnace 10 and then to regenerator 18 |
| 74 | forehearth |
| 75 | heated air flow or hot ambient air |
| 76 | conduit |
| 78 | roof or crown of regenerator 18 |
| 80 | space or combustion chamber in regenerator 18 |
| 82 | internal wall portion of side wall or target wall 26 |
| 84 | outer wall portion of side wall or target wall 26 |
| 86 | insulation |
| 88 | hole of side wall or target wall 26 |
| 90 | block in side wall or target wall 26 |
| 92 | swirler vane or vortex element or vortex member |
| 94 | swirler vane or vortex element or vortex member |

## Claims

1. A method of introducing oxygen enriched air into a regenerative furnace (10), comprising:
- injecting oxygen to a top portion of a regenerator (18, 20) for the furnace (10); and
- entraining air into the oxygen during the injecting.

2. The method according to claim 1, wherein the injecting to the top portion is above heat recovery bricks (64, 66) in the regenerator (18, 20).

3. The method according to claim 1 or 2, wherein the injecting is
- through an end wall (22, 24, 30, 32) of the regenerator (18, 20) and/or
- through a sidewall (26, 34) of the regenerator (18, 20) and/or
- through a peep site hole (62) in the regenerator (18, 20).

4. The method according to at least one of claims 1 to 3, further comprising directing hot ambient air (75) from a region at an exterior of and proximate to the furnace (10) into the entraining air for mixing with the oxygen and the air.

5. The method according to at least one of claims 1 to 4, further comprising mixing the oxygen and the air.

6. The method according to at least one of claims 1 to 5, further comprising adjusting a flow rate of the injecting oxygen for controlling a flow rate of the entraining air to be responsive to a flow rate of the injecting oxygen.

7. A method of introducing oxygen enriched air into a furnace (10), comprising:
- injecting oxygen to a combustion chamber of the furnace (10); and
- entraining air into the oxygen during the injecting and prior to the oxygen entering the combustion chamber.

8. The method according to claim 7, further comprising directing hot ambient air (75) from a region at an exterior of and proximate to the furnace (10) into the entraining air for mixing with the oxygen.

9. The method according to at least one of claims 1 to 8, further comprising creating turbulence
- in the entraining air for mixing with the oxygen and/or
- in the injecting oxygen for mixing with the air.

10. A fluid injection apparatus (42) for a furnace (10), comprising:
- a housing having a space therein and a discharge orifice (53) in communication with the space and a combustion chamber of the furnace (10);
- a lance (48) for oxygen disposed in the space and in communication with the discharge orifice (53), said lance (48) in particular being adjustably moveable within the space to control a flow of the oxygen and the air; and
- an inlet duct (54) for air in communication with the space external to the lance (53).

11. The injection apparatus according to claim 10, further comprising a nozzle (50) mounted to the housing at the discharge orifice (53).

12. The injection apparatus according to claim 10 or 11, wherein the housing is mounted to at least one of an end wall, a sidewall (27, 33) and a crown (35) of the furnace (10) and being in communication with the combustion chamber.

13. The injection apparatus according to at least one of claims 10 to 12, further comprising
- a vortex member (92), in particular swirler vane, disposed in the space for creating turbulence of the air, and/or
- a vortex member (94), in particular swirler vane, disposed at an interior of the oxygen lance (48) for creating turbulence of the oxygen.

14. The injection apparatus according to at least one of claims 10 to 13, further comprising a conduit (76) having
- a first end in communication with the inlet duct (54), and
- a second end in communication with hot ambient air (75) from a region at an exterior of and proximate to the furnace (10).

15. The injection apparatus according to at least one of claims 10 to 14, wherein the housing is mounted to at least one of an end wall (22, 30), a side wall (26, 34) and a roof (23, 31) of a regenerator (18, 20) for the furnace (10) and being in communication with an interior of the regenerator (18, 20).
